(19) Europäisches Patentamt
European Patent Office
Office européen des brevets

(11) Publication number: **0 351 114**
**A2**

## (12) EUROPEAN PATENT APPLICATION

(21) Application number: 89306699.3

(22) Date of filing: 30.06.89

(51) Int. Cl.4: **C09D 5/08 , C09D 133/04 , //B60B3/06**

(30) Priority: 04.07.88 JP 166323/88

(43) Date of publication of application:
17.01.90 Bulletin 90/03

(84) Designated Contracting States:
DE FR GB

(71) Applicant: TOYOTA JIDOSHA KABUSHIKI KAISHA
1, Toyota-cho Toyota-shi
Aichi-ken 471(JP)

(72) Inventor: Ito, Hiroshi
1-10-16, Hirashima
Ichinomiya-shi Aichi-ken(JP)

(74) Representative: Ben-Nathan, Laurence Albert et al
Urquhart-Dykes & Lord 91 Wimpole Street
London W1M 8AH(GB)

(54) **Aluminium wheel.**

(57) The aluminum wheel according to this invention has on its spoke portions a coating film formed by a resin containing 10 - 30 % by weight of silica, to prevent completely stringy rust from generating on the spoke edge portions.

## FIG. 1

EP 0 351 114 A2

EP 0 351 114 A2

## ALUMINUM WHEEL

## BACKGROUND OF THE INVENTION

### Field of the invention

This invention relates to an aluminum wheel. More particularly, it is an aluminum wheel having a high degree of rustproofness along the edges of its spokes.

### Description of the prior art

There is hardly known any aluminum wheel having a coating film covering the edges of its spokes. The majority of the known aluminum wheels have aluminum exposed at the edge of each spoke. Stringy rust is formed soon along the edge of each spoke.

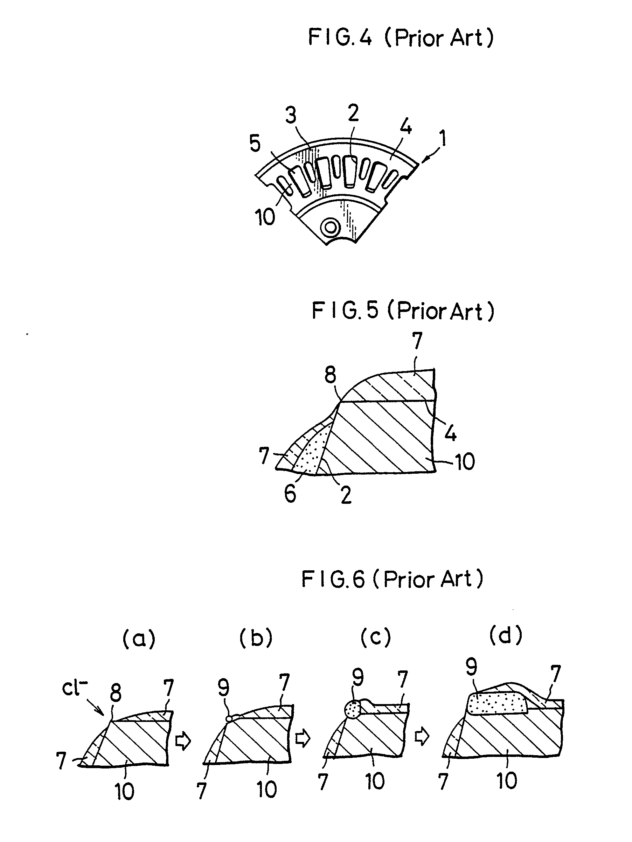

FIGURE 4 shows an aluminum wheel 1 manufactured by a conventional method. According to the conventional method, a blank is cut to form the window wall surfaces 2, rear surface 3 and decorative surface 4 of the wheel 1, the window wall surfaces 2 are covered with a colored coating film, while the decorative surface 4 is masked, and the whole surface of the wheel is, then, covered with a clear coating film.

FIGURE 5 is an enlarged cross-sectional view of FIGURE 4 showing particularly the edge 8 of one of the spoke portions 10 and its vicinity. According to the conventional method, however, the decorative surface 4 which has been formed by cutting as hereinabove described is masked and the wall surfaces 2 of windows 5 and the rear surface 3 of the aluminum wheel 1 are covered with a colored coating film 6, whereafter a clear coating film 7 is formed on the whole surface of the wheel 1. The edge 8 between the wall surface 2 and the decorative surface 4 remains exposed after the colored coating film 6 has been formed, as shown in FIGURE 5. The clear coating film 7 lowers its melt viscosity during baking and its surface tension causes the coating material to flow in two directions from the edge 8 to the wall and decorative surfaces 2 and 4, respectively. As a result, the edge 8 is not satisfactorily covered with the clear coating film 7. This is particularly the case when the edge 8 has a burr.

Therefore, stringy rust is formed along the edge 8. FIGURE 6 shows a mechanism which causes the formation of stringy rust. $C1^-$ acts upon the edge 8 and destroys the clear coating film 7 along it, as shown at (a), and $A1^{3+}$ is dissolved through the destroyed portion of the film 7 and forms stringy rust 9, as shown at (b). An increase of pH occurs at and near the ends of the stringy rust 9 and causes it to grow, as shown at (c) and (d).

The majority of the complaints made in the market of aluminum wheels are of the formation of stringy rust along the spoke edges, as far as the problems of rusting are concerned. There are few complaints of the rusting of chipped or otherwise damaged portions.

Efforts have, therefore, been made from a variety of aspects for the development of improved aluminum wheels. They include (1) deburring, (2) the use of a smaller chamfer angle to facilitate the application of a paint, (3) search for an improved cutting tool which can minimize the occurrence of burr, and (4) cutting a coated blank and applying a paint to it again to give it improved coating, as well as other considerations given to the process for manufacturing aluminum wheels.

Referring to the considerations given to the process for manufacturing aluminum wheels, a vehicular wheel of improved rust and corrosion resistance is disclosed in, for example, Japanese Patent Application laid open under No. 1002/1985. It discloses a vehicular wheel having a disk and a rim, characterized in that at least one of its rim flange, disk and bead seat is coated with a spray coating layer of an inorganic substance.

Reference is also made to Japanese Patent Application filed by ourselves and laid open under No. 155980/1987. This prior application does not relate to the manufacture of aluminum wheels, but discloses a process which is generally applicable for forming a coating film having a high degree of surface smoothness. It comprises the steps of applying a first paint containing an additive imparting structural viscosity or thixotropic property to form a first coating film, leaving the first coating film to stand at room temperature for a short time to cause it to set, and coating the surface of the first coating film with a second paint which is identical in composition to the first paint, except that it does not contain the additive, and

2

which is substantially a Newtonian fluid.

We have also proposed the following processes for preventing the formation of stringy rust along the edge of an aluminum wheel.

In Japanese Patent Application No. 42298/1987, we have proposed a process for coating an aluminum wheel which comprises applying base coating to the whole surface of an aluminum wheel after its rear and window wall surfaces have been formed by machining, and after its decorative surface has been cut, applying clear coating to the whole surface of the wheel.

In Japanese Patent Application No. 164280/1987, we have proposed a process for making an aluminum wheel which comprises subjecting a blank for an aluminum wheel to electro-erosion after it has been cut to form a decorative surface, giving chemical treatment to the whole surface of the wheel, and applying clear coating to it.

In Japanese Patent Application No. 306528/1987, we have proposed a process for manufacturing a wheel having a base consisting of aluminum or an alloy thereof which comprises dipping a coated wheel in an electrolytic bath, and passing an electric current therethrough to cause the anodic oxidation of the edge of the wheel.

Drawbacks of the Prior Art

None of the measures which have been stated at (1) to (4) above is, however, a complete solution to the problems under discussion. For example, it has been pointed out that deburring as stated at (1) is likely to form a new burr.

None of the considerations given to the process for manufacturing aluminum wheels as hereinabove described is a complete solution, either.

The vehicular wheel described in Japanese Patent Application laid open under No. 1002/1985 has a spray coating layer of an inorganic material selected from among metals, ceramics, glass, enamel, etc. It is difficult to form a layer covering the edge satisfactorily.

Our coating process described in Japanese Patent Application laid open under No. 155980/1987 is not concerned with the manufacture of aluminum wheels, as hereinabove mentioned.

None of our processes described in Japanese Patent Application Nos. 42298/1987, 164280/1987 and 306528/1987 can completely prevent the formation of stringy rust along the edges of an aluminum wheel, though they can delay it.

Attempts have also been made to produce coating materials which can coat the edges, but no definitely good material has been obtained as yet. For example, powdered coating materials have been proposed and some of them have been put to actual use. They are, however, far from satisfactory, though they can form a considerably good edge coating, since they maintain high viscosity. immediately after application and do not greatly lower their viscosity under the influence of heat, as compared with ordinary solvent-based paints. They have also the drawback of being able to form only a film having a thickness which is as large as 100 or more microns, while an ordinary coating film thickness is in the range of 20 to 30 microns. Other limitations to the use of powdered coating materials include the facts that they are costly, and that their application requires special equipment. Moreover, the films which the powdered coating materials form have a number of drawbacks. They are easily deformed by stress and easily crack when subjected to a heat cycle. Their adherence to an aluminum base is generally so poor that rusting easily occurs at any chipped portion thereof. They are generally low in weather resistance and easily undergo yellowing. All of these drawbacks are apparently due to the composition which is essentially required of any such powdered coating material, and make difficult the successful practical use of the powdered coating materials.

It is true that a paint containing 10 to 15% by weight of a metallic powder (aluminum pigment) can coat an edge better than any clear or solid coating material can. This is not a perfect material, either, but is used for some emergency purposes, as it can generally be considered to satisfy all of the usual requirements, except the prevention of rust. Insofar as it is a metallic paint, however, it is useless from an ornamental standpoint, as it conceals any decorative pattern formed in the cut surface of an aluminum wheel.

Efforts have also been made to obtain improved coating processes. According to one process which has been actually employed to some extent, a cycle consisting of the steps of applying a conventional clear coating material to form a film having a thickness of 20 to 30 microns and baking it is repeated, say, three to five times, so that the film may finally have a thickness of 100 to 200 microns to cover an edge. This process has, however, a number of drawbacks. It is complicated and expensive. The repeated exposure of the wheel to the heat of baking results in a lowering of its mechanical strength.

Although they do not particularly deal with the coating of an edge, there are many reports talking about

3

the development of paints which can prevent the growth of rust, though they may not be able to prevent rusting itself. None of them can, however, prevent the progress of rusting, but they can only lower to some extent or other the degree to which rust grows. A characteristic paint is one containing a silicone resin. It shows a high degree of rust resistance, as compared with acrylic or polyester resin, or other paints. It is, however, inferior to the conventional paints in many respects, except rust resistance. For example, it is expensive. It can only form a film adhering very badly to an existing coating when it is used for repairing purposes. Moreover, it can form only a film having a thickness of, say, 5 to 10 microns and can, therefore, be used only at the sacrifice of the efficiency of coating operation.

As is obvious from the foregoing, there is not known any aluminum wheel having high resistance to stringy rust, despite the considerations which have been given to various aspects, including the manufacture of wheels, paints, and coating processes.

It is an object of this invention to overcome the drawbacks of the prior art as hereinabove pointed out and provide an aluminum wheel which is completely proof against stringy rust at any of its spoke edges.

Summary of the Invention

The aluminum wheel of this invention is characterized by having a coating film containing 10 to 30% by weight of silica and covering each of its spoke edges.

The coating film can be formed by a paint composed of substantially the same materials as those of any conventional solvent type paint, but containing as much as 10 to 30% by weight of silica based on its solid content.

No paint containing only less than 10% by weight of silica based on its solid content can satisfactorily coat any of the spoke edges. The use of any paint containing over 30% by weight of silica results in a film which is low in toughness and other properties.

The type of silica to be used and the amount in which it is added to the paint depend on the type of the paint which is used, the properties required of the wheel, etc. It is convenient to use commercially available silica.

Although the process employed for applying the paint may have a critical bearing on the effective coating of any such edge, there is no limitation imposed on the practice of this invention. The wheel of this invention can be manufactured without employing any special apparatus or technique, but by adopting conditions which are usually employed, including the use of any ordinary thinner, and the output of a coating gun and the pressure of atomizing air which are usually employed.

When the wheel of this invention is manufactured, it is not particularly necessary to adopt any of the previously proposed measures as hereinbefore stated at (1) to (4), though it may be possible to rely upon any of them as considered desirable in view of the amount of production which is intended, the coating conditions which are desired, etc.

The components, except silica, of the paint which is employed for the purpose of this invention are the materials of which a conventional paint is composed, and satisfy all of the requirements, except rust resistance. The addition of silica does not appreciably increase the cost of the paint, nor does it create any difficulty in the application of the paint.

An ordinary clear coating is preferably applied to the film containing silica to give an improved finish to the appearance (luster and feel to the skin) of the wheel. No clear coating is, however, essential for obtaining the film which is free from any problem in practice use. Moreover, this invention does not preclude the formation of a colored undercoating layer of a conventional metallic or solid coating material. This colored layer can alternatively be formed on the film containing silica. This invention, therefore, permits the use of any desired conventional color or clear coating material with the paint containing silica, and any desired combination thereof.

Result

The paint containing 10 to 30% by, weight of silica based on its solid content exhibits an extremely characteristic behavior of viscosity when applied to the spoke edges. The paint particles show a sharp increase of structural viscosity immediately upon adhering to the spoke edges and thereby cover the edges completely. This paint can effectively cover even the cutting edge of a knife.

Brief description of the drawings

FIGURE 1 is an enlarged cross-sectional view of a spoke portion of an aluminum wheel embodying this invention at and near its edge;

FIGURES 2 and 3 are enlarged cross-sectional views of spoke portions of aluminum wheels according to different embodiments of this invention at and near their edges;

FIGURE 4 is a fragmentary front elevational view of a conventional aluminum wheel;

FIGURE 5 is an enlarged cross-sectional view of a spoke portion of the wheel of FIGURE 4 at and near its edge; and

FIGURES 6(a) to 6(d) are a set of views illustrating the mechanism which causes the formation of stringy rust.

Detailed description of the invention

Examples

The invention will now be described in further detail with reference to specific examples thereof. It is, however, to be understood that these examples are not intended for limiting the scope of this invention.

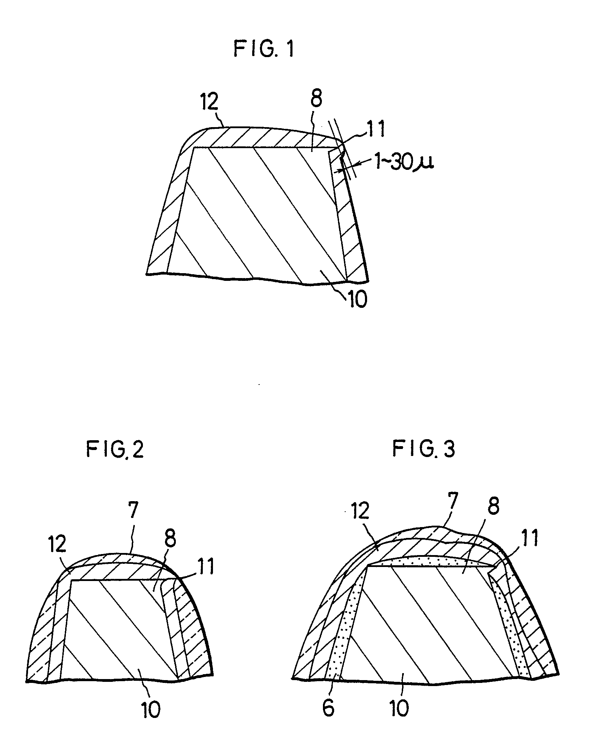

A thinner was added to various types of paints as shown in TABLE 1 to adjust their viscosity to 25 seconds as determined by employing FC#4, and the paints were applied to aluminum wheels manufactured under different conditions as shown in TABLE 2 and each having eight spokes at a rate of about 30 cc per minute by means of a gun W-61 (product of Iwata Painting Co.), while the wheel was rotated on a jig. After each coated wheel had been left undisturbed for about seven minutes, it was placed in a drying oven and the paint was baked at 140°C for 18 minutes. FIGURE 1 is an enlarged cross-sectional view of a spoke portion 10 of a coated aluminum wheel at and near its edge 8. A coating film 12 having a thickness of 1 to 30 microns was formed over a burr 11. A conductivity test was conducted to see if the spoke edge 8 of each sample had been effectively coated. A rusting test was conducted to see if any stringy rust would be formed. One cycle of rusting test consisted of dipping a sample (aluminum wheel) in a 4% by weight HCl solution for one minute, leaving it to stand at room temperature for one day after it had been removed from the solution, and holding it in a wet box having a temperature of 40°C and a relative humidity of 80% for five days.

TABLE 1 - Paints

| Paint No. | Type | Composition |
|---|---|---|
| 1 (Comparative Example 1) | Acrylic (Conventional) | Contains 70 parts of an acrylic resin consisting of 30% MMA, 10%St, 20% EA, 2% AA, 20% HEMA and 18% BMA, by weight, and having a molecular weight of 16000, and 30 parts of a melamine resin (U-van 70SE; product of Mitsui Toatsu) as solid components, and further contains 0.5 part of Tinuvin 900 (product of CIBA-GEIGY AG) and 1 part of Sanol LS292 (product of Sankyo Pharmaceutical) added as UV agents. |
| 2 (Comparative Example 2) | Alkyd (Conventional) | Equal to No. 1, but further contains 70 parts of an alkyd resin (Beckosol ER-3400-60; product of Dai-Nippon Ink & Chemicals) as a solid component. |
| 3 (Comparative Example 3) | Solid (Conventional) | Equal to No. 2, but further contains 30% by weight of a $TiO_2$ pigment (du Pont CR-90). |
| 4 (Comparative Example 4) | Metallic (Conventional) | Equal to No. 1, but further contains 14% by weight of an aluminum paint (Toyo Alpaste 7620NS). |
| 5 (Comparative Example 5) | Silicone | Kaneka gemlac (product of Kanegafuchi Chemical). |
| 6 (Comparative Example 6) | Powder | Acrylic powder paint (product of Kansai Paint). |
| 7 (Example 1) | Silica-containing | Equal to No. 1, but further contains 15% by weight of silica (Aerosil R-972; product of Nippon Aerosil Corporation). |

6

TABLE 1 (continued)

| Paint No. | Type | Composition |
|---|---|---|
| 8 (Example 2) | Silica-containing | Equal to No. 1, but further contains 30% by weight of silica (Aerosil R-972; product of Nippon Aerosil Corporation). |
| 9 (Example 3) | Silica-containing | Equal to No. 1, but further contains 15% by weight of silica (Aerosil 380; product of Nippon Aerosil Corporation). |
| 10 (Example 4) | Silica-containing (solid) | Equal to No. 1, but further contains 30% by weight of silica (du Pont CR-90). |

TABLE 2

| Aluminum wheels Nos. 1 to 48 made on a trial basis under different conditions | | | | | | | | | |
|---|---|---|---|---|---|---|---|---|---|
| Chemical treatment | Spoke angle[*1] | Film thickness 80 $\mu$ Edge treatment | | | | Film thickness 20 $\mu$ Edge treatment | | | |
| | | None | Rough manual deburring | Fine manual deburring | Blank coating | None | Rough manual deburring | Fine manual deburring | Blank coating |
| Cr-based Alodine 1000 (Product of Nippon Paint) | 30° | 1 | 2 | 3 | 4 | 5 | 6 | 7 | 8 |
| | 45° | 9 | 10 | 11 | 12 | 13 | 14 | 15 | 16 |
| | 60° | 17 | 18 | 19 | 20 | 21 | 22 | 23 | 24 |
| Zr-based Alodine 302N-1 (Product of Nippon Paint) | 30° | 25 | 26 | 27 | 28 | 29 | 30 | 31 | 32 |
| | 45° | 33 | 34 | 35 | 36 | 37 | 38 | 39 | 40 |
| | 60° | 41 | 42 | 43 | 44 | 45 | 46 | 47 | 48 |

*1: The angle formed by the lines extending from the radially outer ends of the longitudinal edges of the spoke having a width decreasing radially outwardly of the wheel. *1: The angle formed by the lines extending from the radiall outer ends of the longitudinal edges of the spoke having a width decreasing radially outwardly of the wheel.

Aluminum wheels Nos. 1, 5, 25 and 29 as shown in TABLE 2 were each coated with the paints as shown in TABLE 1. A test was conducted to see if the spoke edge of each wheel had been effectively coated. The results are shown in TABLE 3. The symbols used in TABLE 3 for showing the results of evaluation have the following meanings:

o - Good;

Δ - Fair;

x - Bad.

In view of the results shown in TABLE 3, aluminum wheels Nos. 1 to 24 as shown in TABLE 2 were each coated with paints Nos. 1, 2, 7 and 9 shown in TABLE 1. A test was conducted to see if the spoke edge of each wheel had been effectively coated. The results are shown in TABLE 4.

TABLE 3

| Evaluation of spoke edges for coatability | | | | | | | | | | |
|---|---|---|---|---|---|---|---|---|---|---|
| Paint No. | | | | | | | | | | |
| Wheel No. | 1 | 2 | 3 | 4 | 5 | 6 | 7 | 8 | 9 | 10 |
| 1 | X | X | X | *2 | X | O | O | O | O | O |
| 5 | X | X | X | Δ | X | X | O | O | O | O |
| 25 | X | X | X | *2 | X | O | O | O | O | O |
| 29 | X | X | X | Δ | X | X | O | O | O | O |

*2: No coating giving a film thickness of 80 μ was possible.

TABLE 4

| Evaluation of spoke edges for coatability | | | | | | | | | |
|---|---|---|---|---|---|---|---|---|---|
| Paint No. | | | | | Paint No. | | | | |
| Wheel No. | 1 | 2 | 7 | 9 | Wheel No. | 1 | 2 | 7 | 9 |
| 1 | X | X | O | O | 13 | X | X | O | O |
| 2 | X | X | O | O | 14 | X | X | O | O |
| 3 | X | X | O | O | 15 | X | X | O | O |
| 4 | Δ | Δ | O | O | 16 | X | X | O | O |
| 5 | X | X | O | O | 17 | X | X | O | O |
| 6 | X | X | O | O | 18 | X | X | O | O |
| 7 | X | X | O | O | 19 | X | X | O | O |
| 8 | X | X | O | O | 20 | Δ | Δ | O | O |
| 9 | X | X | O | O | 21 | X | X | O | O |
| 10 | X | X | O | O | 22 | X | X | O | O |
| 11 | X | X | O | O | 23 | X | X | O | O |
| 12 | Δ | Δ | O | O | 24 | X | X | O | O |

Paints Nos. 1 and 7 were also tested for coating aluminum wheels Nos. 25 to 48. The results did not differ from those shown in TABLE 4. The rusting test as hereinbefore described was conducted on each of wheels Nos. 1 to 8 which had each been coated with paints Nos. 1, 2, 7 and 9. Each of the wheels of which the results of coating evaluation are shown as'x'in TABLE 4 started rusting after only one cycle of rusting test. Both of the wheels of which the results are shown as'Δ'started rusting after six cycles. However, none of the wheels of which the results are shown as 'o' formed any rust. even after 20 cycles of rusting test.

FIGURES 2 and 3 are enlarged cross-sectional views of spoke portions 10 of aluminum wheels according to different embodiments of this invention at and near the edges 8 thereof. The wheel shown in FIGURE 2 has a clear coating film 7 formed on a film 12 containing silica. The wheel shown in FIGURE 3 has a colored coating film 6, a film 12 containing silica and formed on the film 6, and a clear coating film 7 formed on the film 12.

Advantages of the Invention

The aluminum wheel of this invention is of improved quality, since the coating film containing 10 to 30% by weight of silica and covering the spoke edges can completely prevent·the formation of stringy rust

8

EP 0 351 114 A2

along those edges. The coating film can be formed by the paint which can be obtained if an appropriate proportion of silica is added to any paint that is usually employed. The application of the paint does not require the use of any special apparatus. The wheel of this invention can, therefore, be manufactured easily and efficiently.

## Claims

1. An aluminum wheel comprising the spoke edge thereof being covered with the coating film of a resin containing 10 - 30% by weight of silica.

2. An aluminum wheel as set forth in Claim 1, the resin comprises acrylic resin and melamine resin.

3. An aluminum wheel as set forth in Claim 1, the film thickness of the coating is 20 - 80 $\mu$.

4. An aluminum wheel as set forth in Claim 1, colored coating is formed on or under the coating film containing 10 - 30% by weight of silica.

5. An aluminum wheel as set forth in Claim 1, clear coating is formed on the coating film containing 10 - 30% by weight of silica.

6. An aluminum wheel as set forth in Claim 1, the colored coating, the coating film containing 10 - 30% by weight of silica and the clear coating are in turn formed in a layer.

7. A method for preparation of an aluminum wheel having a coating film containing 10 - 30% by weight of silica on its spoke edge portion comprising the steps of chemically treating an aluminum wheel, atomizing the coat containing 10 - 30% by weight of silica to the solid content on the spoke edge portions of the wheel, drying the coating thus obtained and baking the same.00271

9

FIG. 1

FIG. 2

FIG. 3

FIG.4 (Prior Art)

FIG.5 (Prior Art)

FIG.6 (Prior Art)

(a)　　　　(b)　　　　(c)　　　　(d)